# EUROPÄISCHE PATENTSCHRIFT

(11) **EP 0 359 962 B1**
(45) Veröffentlichungstag und Bekanntmachung des Hinweises auf die Patenterteilung: **09.06.1993**
(21) Anmeldenummer: 89114417.2
(22) Anmeldetag: 04.08.1989
(51) Int. Cl.: B60N 2/02, B60N 2/48

(54) **Sitz, insbesondere Kraftfahrzeugsitz**
Seat, particularly a motor car seat
Siège, en particulier siège de véhicule automobile

(30) Priorität: 19.09.1988 DE 3831790
(43) Veröffentlichungstag der Anmeldung: 28.03.1990
(73) Patentinhaber: Bayerische Motoren Werke Aktiengesellschaft, 80788 München (DE)
(72) Erfinder: Jovanovic, Nenad, D-8900 Augsburg (DE)

(56) Entgegenhaltungen:
- DE-A- 2 447 874
- DE-A- 2 810 577
- DE-A- 3 034 828
- US-A- 3 311 413

## Beschreibung

Die Erfindung bezieht sich auf einen Sitz der im Oberbegriff des Patentanspruchs 1 genannten und aus der DE-A-3 634 500 hervorgehenden Art.

In dieser Druckschrift ist ein Kraftfahrzeugsitz offenbart (Spalte 4, ab Zeile 61 bis Spalte 5, Zeile 1), der ein durch eine Höhenverstelleinrichtung verlagerbares Sitzteil und eine Kopfstütze aufweist. Diese verbleibt bei unterschiedlichen Höhenlagen des Sitzteils etwa in gleicher Höhenlage. In der Druckschrift ist jedoch nicht das diesbezügliche Zusammenwirken von Sitzteil und Kopfstütze erläutert.

Ferner geht aus der DE-A-2 810 577 (Figur 4) ein längsverschiebbarer Kraftfahrzeugsitz mit einer Kopfstütze hervor, die über zwei Tragstangen an der Rückenlehne höhenverschiebbar gelagert ist. Dabei befindet sich am Sitzteil und an der Rückenlehne ein Bowdenzug, dessen Drahtseil mit einem Endabschnitt an einem unter dem Sitzteil liegenden, schwenkbar gelagerten Schwenknebel angreift, während der gegenüberliegende Endabschnitt des Drahtseils an einem Verbindungsteil der Tragstangen der Kopfstütze befestigt ist. Wird der Kraftfahrzeugsitz nach hinten oder nach vorne längsverstellt, so wird die Kopfstütze über den Bowdenzug nach oben bzw. nach unten verlagert.

Aufgabe der Erfindung ist es, bei einem Sitz mit einer höhenverschiebbar an der Rückenlehne gelagerten Kopfstütze der im Oberbegriff des Patentanspruchs 1 genannten Art eine Vorrichtung zu schaffen, durch die bei unterschiedlichen Höhenlagen des Sitzteils die Beibehaltung der Höhenlage der Kopfstütze erreicht werden kann.

Zur Lösung der Aufgabe sind die im kennzeichnenden Teil des Patentanspruchs 1 dargelegten Merkmale vorgesehen.

Die erfindungsgemäße, bei unterschiedlichen Höhenlagen des Sitzteils eine Beibehaltung der Höhenlage der Kopfstütze gewährleistende Vorrichtung besteht vorteilhafterweise aus wenig und dabei kostengünstig herstellbaren Einzelteilen, die auch kaum störanfällig im Betriebseinsatz sind. Bedarfsweise kann auch die Vorrichtung mit verhältnismäßig geringem Kostenaufwand nachgerüstet werden.

Da zur Höhenverstellung des Sitzteils einzelne Stützhebel vorgesehen sind, kann mit einem lehnenseitigen Stützhebel ein Schwenkhebel verbunden und dieser mit einem Führungsstift versehen werden. Dieser greift in einen Längsschlitz einer am Sitzteil angelenkten Schwenkplatte längsverschiebbar ein, an der das Drahtseil eines Bowdenzugs angebracht ist. Bei niedergestelltem Sitzteil greift dabei an der Kopfstütze der Bowdenzug an, während diese bei hochgestelltem Sitzteil durch die Wirkung einer Zugfeder ihre Höhenlage beibehält (Merkmale der Patentansprüche 2 und 3).

Gemäß den Merkmalen des Patentanspruchs 4 sind die U-förmig gestalteten Tragstangen der Kopfstütze über jeweils ein lösbares Verbindungsgelenk mit an der Kopfstütze festgelegten Tragstangenabschnitten verbunden, so daß die Kopfstütze bedarfsweise unkompliziert gelöst werden kann.

Ein Ausführungsbeispiel der Erfindung ist in der Zeichnung dargestellt und wird im folgenden erläutert. Es zeigt:
- Fig. 1: einen Fahrzeugsitz in Vorderansicht mit Höhenverstelleinrichtung des Sitzteils und der mit dieser zusammenwirkenden Verstelleinrichtung der Kopfstütze,
- Fig. 2: eine vergrößerte Einzelansicht der Höhenverstelleinrichtung, der Schwenkplatte und des an dieser angreifenden Bowdenzugs in hochgestellter (durchgezogene Linien) und niedergestellter (strichpunktierte Linien) Lage des Sitzteils,
- Fig. 3: eine Teildraufsicht zu Fig. 2 in niedergestellter Lage des Sitzteils,
- Fig. 4: eine vergrößerte Teilansicht der Rückenlehne mit Führungsgestell für die Kopfstütze.

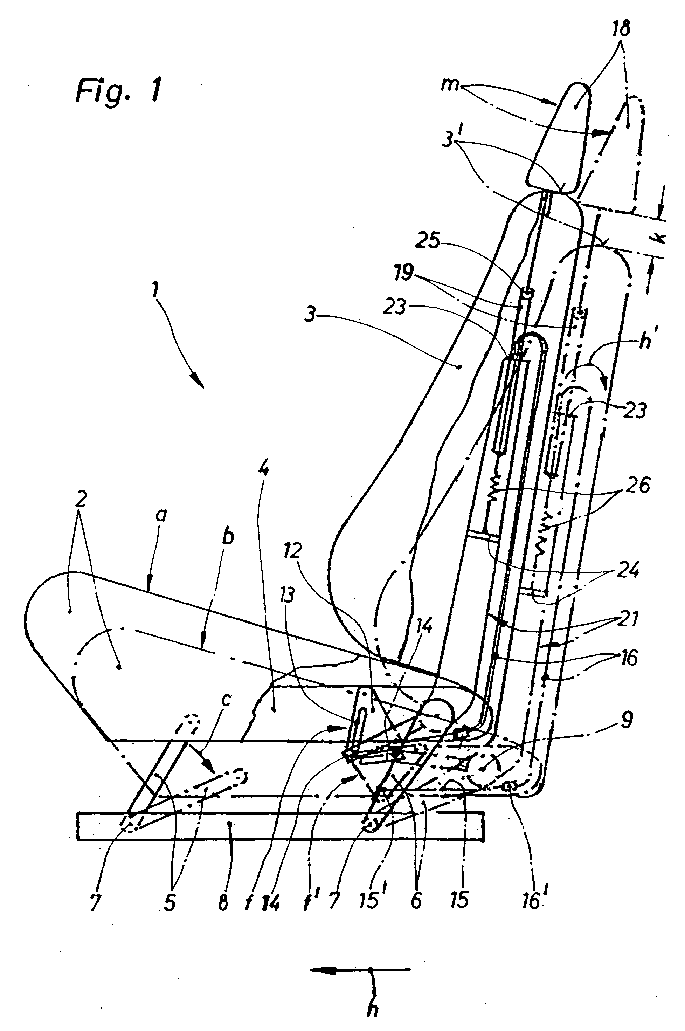

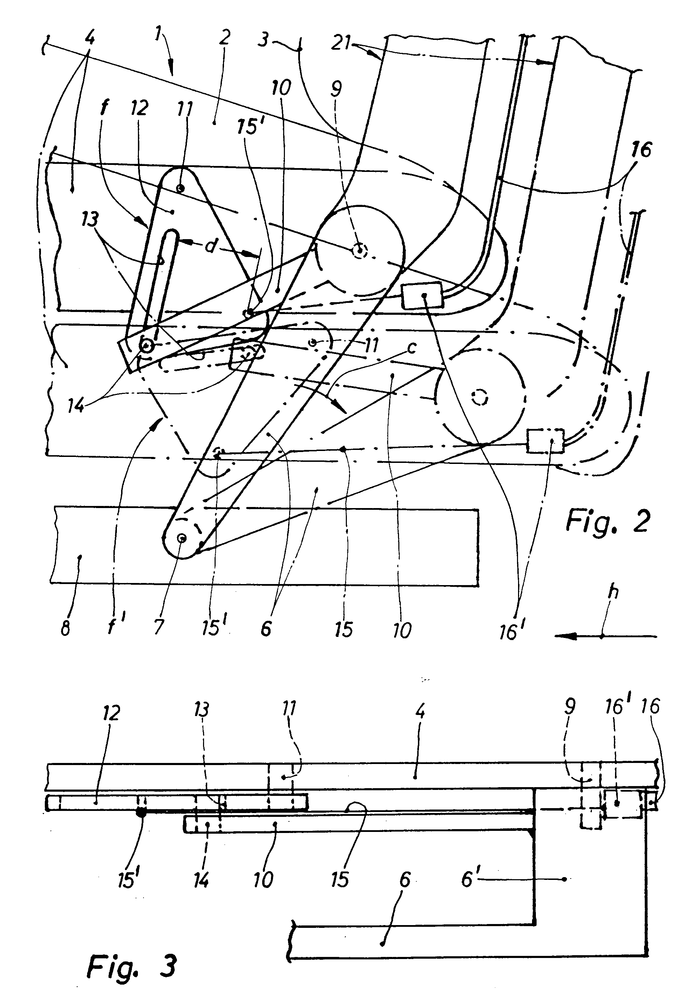

Der in Fig. 1 dargestellte Kraftfahrzeugsitz 1 besteht aus einem Sitzteil 2 und einer an diesem angelenkten Rückenlehne 3. Dabei ist der Sitzteil 2 von einem rahmenförmigen, etwa seiner rechteckigen Umrißkontur entsprechenden Tragelement 4 getragen, an dem seinerseits im Bereich der Vorderkante des Sitzteils 2 und im Bereich der Rückenlehne 3 jeweils zwei, im Abstand voneinander angeordnete Stützhebel 5 und 6 angelenkt sind, die mit ihren untenliegenden Endabschnitten an einer am Fahrzeugboden längsverschiebbar angebrachten Führungsschiene 8 über Schwenkbolzen 7 schwenkbar gelagert sind. Im vorliegenden Ausführungsbeispiel wird der Sitzteil 2 und damit die Rückenlehne 3 von der in den Fig. 1 und 2 mit durchgezogenen Linien dargestellten hochgestellten Lage a nach Entriegeln einer nicht dargestellten Verriegelungsvorrichtung bei Belastung des Sitzteils 2 durch den Fahrzeuginsassen gegen Federwirkung in die mit strichpunktierten Linien veranschaulichte, niedergestellte Lage b verlagert, wobei die Stützhebel 5 und 6 in Pfeilrichtung c verschwenkt werden. In der niedergestellten Lage b des Sitzteils 2 wird dieser durch eine Arretiereinrichtung gehalten, nach deren Lösen der Sitzteil 2 durch Federwirkung in die hochgestellte Lage a verlagert wird.

Wie die Fig. 1 bis 3 zeigen, ist einer der im Bereich der Rückenlehne 3 liegenden Stützhebel 6 über einen Lagerbolzen 9 an dem der Fahrzeugaußenseite zugewandten Rahmenabschnitt des Tragelements 4 angelenkt. Ferner ist in parallelem Abstand zum Stützhebel 6 an diesem über ein Zwischenteil 6' ein Schwenkhebel 10 unlösbar befestigt, der mit dem Stützhebel 6 einen Winkel von etwa 40° einschließt. Über einen Lagerzapfen 11 ist ferner am Tragelement 4 eine dreieckförmige Schwenkplatte 12 angelenkt, die einen parallel zu einer Außenkante verlaufenden und dabei zum Lagerzapfen 11 gerichteten Längsschlitz 13 aufweist, wobei in diesen ein vom freien Endabschnitt des Schwenkhebels 10 abstehender Führungsstift 14 längsverschiebbar eingreift. An der Schwenkplatte 12 ist schließlich in einem Abstand d zum Längsschlitz 13 und damit zu ihrem Lagerzapfen 11 das Drahtseil 15 eines Bowdenzugs 16 an einer Anlenkstelle 15' angelenkt, dessen erster Endabschnitt 16' am Tragelement 4 befestigt ist.

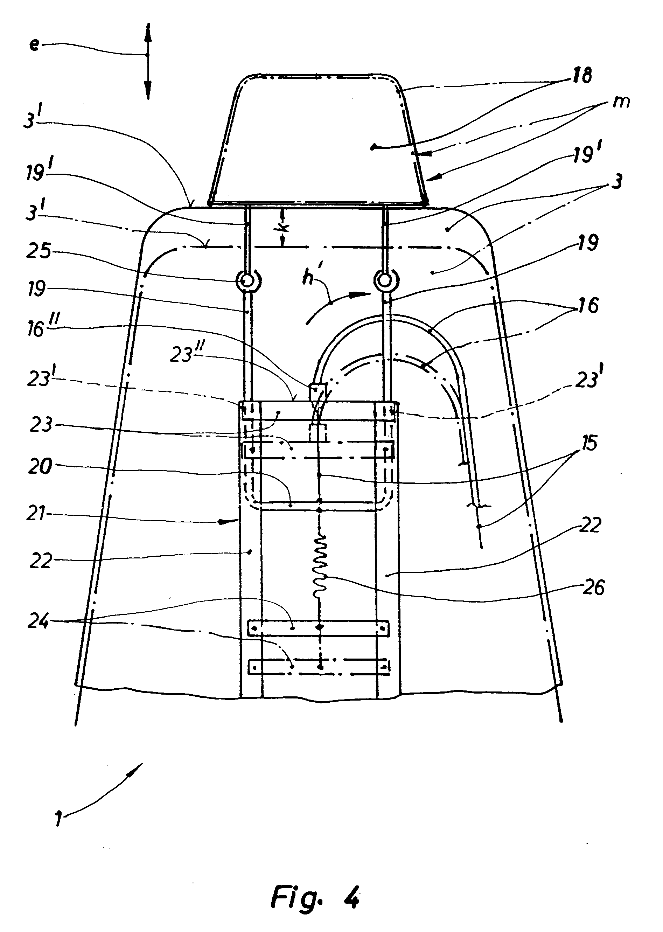

In Fig. 4 ist zu ersehen, daß die an der Rückenlehne 3 höhenverschiebbar angeordnete Kopfstütze 18 von zwei im Abstand voneinander angeordneten Tragstangen 19 gehalten ist, die an ihrem untenliegenden Ende über ein Querteil 20 verbunden und in einem in der Rückenlehne 3 angeordneten, sich dabei etwa parallel zu deren Rückseite erstreckenden Führungsgestell 21 höhenverschiebbar geführt sind. Dieses besteht aus zwei im Querschnitt U-förmigen, jeweils eine Tragstange 19 umgebenden Führungsschienen 22, die über eine obenliegende Führungstraverse 23 und ein in größerem Abstand zur untersten Lage des Querteils 20 vorgesehenes, querverlaufendes Verbindungsteil 24 verbunden sind. Die in der Führungstraverse 23 vorgesehenen Durchgangsöffnungen 23' zum Durchführen der Tragstangen 19 können derart ausgebildet sein, daß diese bei Höhenverschiebungen in den Richtungen des Doppelpfeils e in der Führungstraverse 23 geführt werden. An den obenliegenden Endabschnitten der Tragstangen 19 ist jeweils ein Verbindungsgelenk 25 vorgesehen, mit dem die an der Kopfstütze 18 befestigten Tragstangenabschnitte 19' lösbar verbindbar sind.

Der mit seinem ersten Endabschnitt 16' am Tragelement 4 befestigte Bowdenzug 16 ist mit seinem zweiten Endabschnitt 16" unter Bildung eines konvexen Bogens an der Oberseite 23" der Führungstraverse 23 angebracht wie Fig. 4 zeigt. Das Drahtseil 15 des Bowdenzugs 16 ist dabei an der Oberseite des Querteils 20 befestigt, während an dessen Unterseite eine mit ihrem gegenüberliegenden Ende am Verbindungsteil 24 befestigte Zugfeder 26 mit Vorspannung angebracht ist.

Durch die Wirkung der Zugfeder 26 wird die Kopfstütze 18 in hochgestellter Lage a des Sitzteils 2 (Fig. 1 und 4) über ihre Tragstangen 19 an die Oberkante 3' der Rückenlehne 3 gezogen. Wird der Sitzteil 2 und damit die Rückenlehne 3 des Kraftfahrzeugsitzes 1 in die niedergestellte Lage b (strichpunktierte Linien) verlagert, so gleitet durch Verschwenken des Stützhebels 6 in Pfeilrichtung c der Führungsstift 14 längs des Längsschlitzes 13 der Schwenkplatte 12 und verschwenkt diese dadurch von der in Fig. 2 mit durchgezogenen Linien dargestellten Schwenklage f in die mit strichpunktierten Linien dargestellte Schwenklage f'. Hierdurch wird die Anlenkstelle 15' des Drahtseils 15 des Bowdenzugs 16 gegenüber ihrer Lage in hochgestellter Lage a des Sitzteils 2 nach vorne (Pfeilrichtung h) verlagert, so daß auch der an der Oberseite des Querteils 20 der Führungsstangen 19 der Kopfstütze 18 angreifende, gegenüberliegende Endabschnitt des Drahtseils 15 gegen die Wirkung der Zugfeder 26 nach oben (Pfeilrichtung h' in Fig. 4) gezogen wird. Bei der dabei erfolgenden Relativverschiebung zwischen den Tragstangen 19 und dem Führungsgestell 21, also in bezug zur Rückenlehne 3, verbleibt die Kopfstütze 18 etwa in ihrer ursprünglichen Lage m (bei hochgestellter Lage a des Sitzteils 2), während durch das Abwärtsbewegen der Rückenlehne 3 zwischen deren Oberkante 3' und der Unterkante der Kopfstütze 18 ein Abstand k entsteht. Wenn der Sitzteil 2 von der niedergestellten Lage b in die hochgestellte Lage a verlagert wird, so wird gleichzeitig die Schwenkplatte 12 über den Schwenkhebel 10 (Führungsstift 14) und Stützhebel 6 von ihrer Schwenklage f' in die Schwenklage f zurückgeschwenkt und damit das Drahtseil 15 durch die Wirkung der (vorgespannten) Zugfeder 26 entgegen der Pfeilrichtung h zurückverlagert, wobei die Kopfstütze 18 durch Federwirkung (Zugfeder 26) im Bereich ihrer ursprünglichen Höhe m verbleibt.

Bei außenliegend angeordnetem Stützhebel 6 (wie beim Ausführungsbeispiel ) mit Schwenkhebel 10 ist der innenliegende Stützhebel 6 als ein einschenkeliger Schwenkhebel gestaltet; natürlich kann der mit dem Schwenkhebel 10 versehene Stützhebel 6 auch an der der Fahrzeuglängsmittelebene zugewandten Innenseite des Kraftfahrzeugsitzes 1 oder auch im Mittelbereich von dessen Breitenerstreckung vorgesehen werden.

## Patentansprüche

1. Sitz, insbesondere Kraftfahrzeugsitz (1), mit einem über eine Verstelleinrichtung höhenverlagerbaren Sitzteil (2) und einer mit diesem verbundenen Rückenlehne (3) mit einer Kopfstütze (18), die bei unterschiedlicher Höhenlage des Sitzteils (2) etwa in gleicher Höhe verbleibt, dadurch gekennzeichnet, daß im Bereich der Vorderkante des Sitzteils (2) und im Bereich der Rückenlehne (3) jeweils zwei, im Abstand voneinander angeordnete Stützhebel (5 und 6) angelenkt sind, die mit ihren untenliegenden Endabschnitten an einer am Fahrzeugboden längsverschiebbar angebrachten Führungsschiene (8) schwenkbar gelagert sind, wobei ein als Verstellmittel dienendes und mit der Kopfstütze (18) in Verbindung stehendes Zugelement (Bowdenzug 16) derart an einem am Sitzteil (2) angelenkten Schwenkelement (Schwenkplatte 12) angreift, daß die Kopfstütze (18) unter jeweiliger Relativverschiebung ihrer Tragstangen (19) in bezug auf die Rückenlehne (3) bei niedergestelltem Sitzteil (Lage b) einen Abstand (k) gegenüber deren Oberkante (3') aufweist, bei hochgestelltem Sitzteil (Lage a) dagegen nahe dieser liegt.

2. Sitz nach Anspruch 1, dadurch gekennzeichnet, daß
- mit einem lehnenseitigen Stützhebel (6) des Sitzteils (2) unter Einschließung eines spitzen Winkels ein Schwenkhebel (10) fest verbunden ist,
- an einem dem Sitzteil (2) zugehörigen Tragelement (4) über einen Lagerzapfen (11) eine Schwenkplatte (12) angelenkt ist, die einen etwa auf den Lagerzapfen (11) gerichteten Längsschlitz (13) aufweist, in den ein vom Schwenkhebel (10) abstehender Führungsstift (14) längsverschiebbar eingreift,
- an der Schwenkplatte (12) in einem Abstand (d) vom Längsschlitz (13) das Drahtseil (15) eines Bowdenzugs (16) angreift (Anlenkstelle 15'), dessen erster Endabschnitt (16') am Tragelement (4) befestigt ist.

3. Sitz nach Anspruch 2, dadurch gekennzeichnet, daß
- die Tragstangen (19) der Kopfstütze (18) in einem Führungsgestell (21) der Rückenlehne (3) höhenverschiebbar geführt sind,
- das Führungsgestell (21) im wesentlichen aus zwei seitlichen Führungsschienen (22) und einer obenliegenden Führungstraverse (23) sowie einem zwischenliegenden Verbindungsteil (24) besteht, wobei
- an der Oberseite (23') der Führungstraverse (23) der zweite Endabschnitt (16") des Bowdenzugs (16) angebracht ist, wobei dessen Drahtseil (15) an einem die Tragstangen (19) verbindenden Querteil (20) angreift, an dessen Unterseite eine mit ihrem anderen Ende am Verbindungsteil (24) festgelegte Zugfeder (26) mit Vorspannung angebracht ist.

4. Sitz nach Anspruch 3, dadurch gekennzeichnet, daß die Tragstangen (19) der Kopfstütze (18) über jeweils ein lösbares Verbindungsgelenk (25) mit an der Kopfstütze festgelegten Tragstangenabschnitten (19') verbunden sind.

## Claims

1. A seat, more especially a motor vehicle seat (1), comprising a seat part (2) which is vertically adjustable by an adjusting device, and a back rest (3) and a head rest (18) which is connected to the seat part but remains substantially at the same height when the height of the seat part (2) is varied, characterised in that two supporting levers (5) are pivoted near the front edge of the seat part (2) and two supporting levers (6) spaced apart from the levers (5) are pivoted near the back rest (3), the bottom end portions of the levers being pivotably mounted on a guide rail (8) attached to the vehicle floor so as to be movable lengthwise, and a tension element (Bowden cable 16) serving as an adjustment means and connected to the head rest (18) engages a swivel element (swivel plate 12) pivoted to the seat part (2) so that, as a result of a movement of the bearing rods (19) relative to the back rest (3), the head rest (18) is at a distance (k) from the top edge (3') of the back rest when the seat part is in the low position (position b) whereas the head rest is near the top edge (3') when the seat part is in the high position (position a).

2. A seat according to claim 1, characterised in that
- a rocking lever (10) is permanently connected to a supporting lever (6) of the seat part (2) on the armrest side so as to include an acute angle,
- a swivel plate (12) is pivoted by a journal (11) to a bearing element (4) belonging to the seat part (2) and has a slot (13) extending approximately towards the journal (11) and engaging a longitudinally movable guide pin (14) projecting from the rocking lever (10), and
- the wire (15) of a Bowden cable (16) engages the swivel plate (12) at a distance (d) from the slot (13) (pivot place 15'), the first end portion (16') of the Bowden cable being secured to the bearing element (4).

3. A seat according to claim 2, characterised in that
- the rods (19) supporting the head rest (18) are guided so as to be vertically movable in a guide frame (21) in the back rest (3),
- the guide frame (21) substantially comprises two lateral guide rails (22), a top guide cross-member (23) and an intermediate connecting part (24), and
- the second end portion (16'') of the Bowden cable (16) is attached to the top side (23') of the cross-member (23), whereas the wire (15) of the cable engages a transverse part (20) connecting the supporting rods (19), and a tension spring (26) is attached to the underside of the transverse part, the other end of the tension spring being attached with prestress to the connecting part (24).

4. A seat according to claim 3, characterised in that the rods (19) bearing the head rest (18) are each connected by a releasable link (25) to the bearing-rod portions (19') secured to the head rest.

## Revendications

1. Siège, en particulier siège de véhicule automobile (1), comportant une assise (2) équipée d'un dispositif de réglage en hauteur et reliée à un dossier (3) portant un appuie-tête (18) dont la hauteur ne varie sensiblement pas avec la hauteur de l'assise, siège caractérisé en ce que vers chacun des bords avant et arrière de l'assise (2) sont articulés deux leviers de soutien (5 et 6) présentant entre eux un certain intervalle et dont les extrémités inférieures sont articulées le long d'un rail de guidage (8) pouvant coulisser longitudinalement sur le plancher du véhicule, tandis qu'un élément de traction (liaison Bowden 16) servant d'organe de réglage relié à l'appuie-tête (18) est raccordé à un élément pivotant (plaque pivotante 12) articulé à l'assise (2) de sorte que l'appuie-tête, lorsque ses tiges porteuses (19) coulissant par rapport au dossier (3) présente par rapport au bord supérieur (3') de celui ci un certain intervalle (k) lorsque l'assise est en position basse (b), tandis que, pour la position haute (a) de l'assise, l'appuie-tête est pratiquement en contact du bord supérieur du dossier.

2. Siège selon la revendication 1, caractérisé en ce que :
- un levier pivotant (10) est solidaire, en faisant avec lui un angle aigu, d'un levier d'appui (6) de l'assise (2), côté dossier,
- sur un élément porteur (4) de l'assise (2) est articulé par l'intermédiaire d'un pivot (11) une plaque pivotante (12) portant une lumière longitudinale (13) dirigée sensiblement vers le pivot (11) et dans laquelle peut coulisser longitudinalement un ergot de guidage (14) porté par le levier pivotant (10),
- le câble (15) d'une liaison Bowden (16), dont la première extrémité (16') est fixée à l'élément porteur (4) est raccordé à la plaque pivotante (12), à une certaine distance (d) de la lumière longitudinale (13).

3. Siège selon la revendication 2, caractérisé en ce que :
- les tiges porteuses (19) de l'appuie-tête (18) sont réglables en hauteur par coulissement dans une armature de guidage (21) du dossier,
- l'armature de guidage (21) est constituée essentiellement de deux rails latéraux de guidage (22), d'une traverse supérieure de guidage (23) et d'une entretoise de liaison (24),
- a la partie supérieure (23') de la traverse de guidage (23) est fixée la seconde extrémité (16'') de la gaine Bowden (16) dont le câble (15) est accroché à une traverse (20) reliant les tiges porteuses (19) et à la partie inférieure de laquelle est accroché un ressort de traction (26) sous tension dont l'autre extrémité est fixée à l'entretoise de liaison (24).

4. Siège selon la revendication 3, caractérisé en ce que les tiges porteuses (19) de l'appuietête (18) sont munies chacune d'une articulation amovible de liaison (25) à la partie (19') de la tige porteuse solidaire de l'appuie-tête.
